# EUROPÄISCHE PATENTANMELDUNG

(11) **EP 3 059 107 A1**
(43) Veröffentlichungstag der Anmeldung: **24.08.2016**
(21) Anmeldenummer: 16000167.3
(22) Anmeldetag: 25.01.2016
(51) Int. Cl.: B60J 5/06

(54) **ZOLLVERSCHLUSS**

(30) Priorität: 17.02.2015 DE 102015001848
(71) Anmelder: PWP SA, CH-1530 Payerne (CH)
(72) Erfinder: Gijsbers, Eric, 3232 Ins/BE (CH); Suer, Arne, 42859 Remscheid (DE)
(74) Vertreter: Füssel, Michael

(57) **Zusammenfassung**

Die vorliegende Erfindung betrifft einen Zollverschluss (1) für Nutzfahrzeuge mit Plane. Erfindungsgemäß wird der bekannte Zollverschluss (1) so verbessert, dass ein unerlaubtes Öffnen des Drehantriebs (2) im Bereich zwischen Spannratsche (5) und Planenwickelrohr (7) so erschwert wird, dass bei einer unerlaubten Manipulation in jedem Fall eine Zerstörung des Drehantriebs (2) feststellbar ist. Hierfür ist ein Adapter (6) zwischen der Spannratsche (5) und dem Planenwickelrohr (7) vorgesehen, an dem ein axial fixiertes jedoch frei drehbares Ringelement (13) bzw. Ringnutelement (15) sitzt und von diesem nicht zerstörungsfrei gelöst werden kann.

## Beschreibung

Die vorliegende Erfindung betrifft einen Zollverschluss nach Oberbegriff des Hauptanspruchs.

Derartige Zollverschlüsse sind Bestandteile von Aufbauten von Nutzfahrzeugen mit Planen. Diese Planen müssen zu Zwecken der Zollkontrolle auf einfache Weise so verschlossen werden können, dass ohne weiteres von Außen feststellbar ist, ob die Plane widerrechtlich geöffnet wurde oder nicht. Diese Maßnahme dient neben einem sicheren Zollverschluss auch der Kontrolle über eine widerrechtliche Entfernung von Ladung oder Ladungsteilen im Inlandsverkehr, denn ein Zollverschluss kann nur durch Zerstörung geöffnet werden, was auf einfache Weise von Außen erkennbar sein soll.

Zu diesem Zweck ist es bekannt, die Spannratschen derartiger Planenspannvorrichtungen gegenüber den fest am Fahrzeug verschraubten Ratschengehäusen in einer Verschlussstellung so zu verschließen, dass die Spannratsche nur unter Zerstörung des Verschlusses geöffnet werden kann.

Da der Ratschenhebel in der Verschlussstellung auch die Befestigungselemente des Ratschengehäuses gegenüber dem Fahrzeugaufbau verdeckt, kann davon ausgegangen werden, dass in dieser Verschlussstellung auch das Ratschengehäuse nicht einfach abgeschraubt werden kann, um die Plane unbefugter Weise zu öffnen.

Im Zusammenhang mit derartigen LKW Aufbauten gibt es zahlreiche Hersteller von solchen Spannsystemen, die über unterschiedliche Antriebsquerschnitte/Abtriebsquerschnitte von Ratschen und Planenwickelrohren verfügen. Bekannter Weise werden diese unterschiedlichen Querschnitte über Adapter unterschiedlicher Aufnahmequerschnitte für Antrieb und Abtrieb in funktionsfähigen Zusammenhang gebracht. Hier jedoch besteht die Gefahr, dass aufgrund der Abmessungen unterschiedlicher An- und Abtriebsquerschnitte auch in Längsrichtung der jeweiligen Drehachsen der Planenwickelrohre ein unerkannt bleibendes Aushebeln des Drehantriebs zu unerlaubten Zwecken nicht gänzlich ausgeschlossen werden kann.

Die Aufgabe der Erfindung besteht folglich darin, den bekannten Zollverschluss so zu verbessern, dass ein unerlaubtes Öffnen des Drehantriebs im Bereich zwischen Spannratsche und Planenwickelrohr so erschwert wird, dass in jedem Fall eine Zerstörung dieses Drehantriebs feststellbar ist bei einer unerlaubten Manipulation.

Diese Aufgabe löst die Erfindung mit den Merkmalen der Anspruche 1 und 2.

Dabei stehen die Merkmale der Ansprüche 1 und 2 gleichwertig nebeneinander. Insoweit wird stets auf beide Ansprüche Bezug genommen, sofern nicht explizit auf lediglich einen einzigen der Ansprüche 1 und 2 hingewiesen wird.

Von wesentlicher Bedeutung ist ein Adapter zwischen der Spannratsche und dem Planenwickelrohr, an dem einerseits ein axial fixiertes jedoch frei drehbares Ringelement bzw. Ringnutelement sitzt und von diesem nicht zerstörungsfrei gelöst werden kann und das an seinem anderen Ende ein verplombungsfähiges Sicherungselement aufweist, welches in der Verschlussstellung der Spannratsche gegenüber dem Ratschengehäuse so festgelegt ist, dass es dort auch nur unter Zerstörung lösbar ist.

Der wesentliche Gedanke besteht also darin, den notwendiger Weise zwischen unterschiedlichen An- und Abtriebssystemen zwischen Spannratsche und Planenwickelrohr notwendigen Adapter in axialer Richtung gegenüber dem Ratschengehäuse so festzulegen, dass er bei einem in Verschlussstellung befindlichen Ratschenhebel nicht zerstörungsfrei entfernbar ist.

Zweckmäßiger Weise wird der Adapter aus mehreren Einzelteilen zusammengesetzt, die unter Ausbildung von Ringnut bzw. Ringbund mit gleichzeitiger Befestigung von Ringelement bzw. Ringnutelement unlösbar miteinander verbunden werden, wobei das Ringelement bzw. Ringnutelement in geeigneter Weise ein damit unlösbar verbundenes Verschlussstück aufweist, welches bei einem Ratschenhebel, der sich in Verschlussstellung befindet, ebenfalls mit verschlossen wird.

Hierfür sind Ausführungsbeispiele gegeben.

Zweckmäßiger Weise werden sowohl für den Ratschenhebel als auch für das Verschlussstück jeweils ein und dasselbe verplombungsfähige Sicherungselement verwendet, so dass die Anbringung lediglich einer einzigen Sicherungsschnur auch der Aushebelsicherung des Drehantriebs zwischen Spannratsche und Planenwickelrohr dient.

Der Unterschied der beiderseitigen Ausführungsformen nach Anspruch 1 bzw. 2 besteht darin, dass sowohl ein Adapter mit einer Umfangsrille als auch ein Adapter mit einem umgebenden Ringbund geeignet ist.

Im Falle eines Adapters mit Umfangsrille wird vorgeschlagen, in die Umfangsrille ein Ringelement einzulegen, welches mit der Adapteraußenwand bündig abschließt. Dies bietet den Vorteil, dass eine Manipulation von Außen praktisch ausgeschlossen ist. Im Falle eines den Adapter umgebenden Ringbundes wird vorgeschlagen, ein Ringnutelement zu verwenden, welches den Ringbund umschließt. Sowohl Ringnutelement als auch Ringelement sollen jeweils um mehr als die Hälfte um den Adapter herum verlaufen, vorzugsweise geschlossen ringförmig, um auch eine gewaltsame Entfernung praktisch unmöglich zu machen.

Das jeweilige Verschlussstück ist für alle Ausführungsformen vorzugsweise jeweils ein einfaches gebogenes Metallstück, welches mit einer Sicherungsfahne zwischen dem Ratschengehäuse und dem Ratschenhebel sitzt.

Dabei soll das Metallstück den Ratschenhebel in seiner Verschlussstellung so hintergreifen, dass der Adapter in axialer Richtung zur Drehachse des Planenwickelrohrs praktisch unverrückbar axial fixiert ist und zugleich über das verplompte Sicherungselement nicht manipuliert werden kann.

Zu diesem Zweck wird vorgeschlagen, dass das Metallstück, welches letztlich den Verschluss bewirkt, der Innenkontur des Ratschengehäuses folgt und vom Ratschenhebel in seiner Verschlussstellung fixiert wird.

Zu diesem Zweck soll das Metallstück den Ratschenhebel parallel zu dessen Drehachse hintergreifen. Hierzu wird ergänzend vorgeschlagen, dass das Metallstück entsprechend winkelförmig geformt ist um sich zwischen Ratschengehäuse und Ratschenhebel in Verschlussstellung einzuschmiegen.

Von wesentlicher Bedeutung für die Erfindung ist daher der Adapater, der den Drehverbund zwischen dem Ratschenantrieb und dem Planenwickelrohr herstellt und die jeweiligen Antriebs- bzw. Abtriebsquerschnitte aufweist. Durch die Verwendung unterschiedlicher Adapter, die zweckmäßiger Weise über thermische Fügeverfahren unter Ausbildung von Umfangsrille bzw. Ringbund miteinander verbunden werden, lässt sich die Erfindung auf praktisch alle Antriebs- bzw. Abtriebssysteme derartiger Planenwickelvorrichtungen an Nutzfahrzeugen anwenden.

Hierfür sind Ausführungsbeispiele gegeben.

Im Folgenden wird die Erfindung anhand von Ausführungsbeispielen näher erläutert.

Es zeigen:
- Fig.1: ein erstes Ausführungsbeispiel der Erfindung mit geöffneter Spannratsche;
- Fig.1b: das Ausführungsbeispiel gem. Fig.1 anstelle Mit Umfangsrille mit einem Ringbund;
- Fig.2: ein Ausführungsbeispiel der Erfindung mit geschlossener und verplombter Spannratsche;
- Fig.3: Darstellung zur Herstellung eines erfindungsgemäßen Adapters;
- Fig.4: der erfindungsgemäße Adapter gem. Fig.3 in axialer Aufsicht von oben.

Sofern im Folgenden nichts anders gesagt ist, gilt die folgende Beschreibung stets für alle Figuren. Die Figuren zeigen einen Zollverschluss 1 nach vorliegender Erfindung.

Der Zollverschluss 1 dient der einfachen Sichtkontrolle des Drehantriebs 2 zum Spannen einer LKW-Plane 3 im Hinblick auf die Frage, ob die LKW-Plane 3 unzulässig geöffnet wurde oder nicht.

Derartiger Drehantrieb 2 weist einerseits eine am Fahrzeug mit einem Ratschengehäuse 4 befestigte Spannratsche 5 auf und einen Adapter 6, in welchen, bekannter Weise über ein Pressverfahren, das Planenwickelrohr 7 so eingepresst ist, dass die Drehbewegung, die über den Ratschenhebel 8 in die Drehachse 20 eingeleitet wird, auf das Planenwickelrohr 7 übertragen wird und auf diese Weise die LKW-Plane 3 gespannt werden kann.

Zu diesem Zweck weist der Adapter 6 an seinem einen Ende einen Anschluss für den Abtrieb der Spannratsche 5 auf und ist mit seinem anderen Ende drehfest mit dem Planenwickelrohr 7 verbunden, auf welchem die Plane aufgewickelt werden kann.

Das Ratschengehäuse 4 ist ortsfest gegenüber dem Fahrzeugchassis oder fest damit verbundener Teile verbunden.

Zu diesem Zweck dienen manipulationssichere Schraubverbindungen, mit denen das Ratschengehäuse 4 am Fahrzeug angeschraubt werden kann. Diese Schrauben finden ihre Gegengewinde z.B. in einer gemeinsamen Gewindeplatte auf der Rückseite der Befestigungsstelle oder in angeschweißten Gewindehülsen, aus denen sie mit ihren Gewinden nicht herausragen.

Wesentlich ist, dass bei einem geschlossenen Ratschenhebel 8, wenn sich dieser also in seiner Verschlussstellung befindet und praktisch vollständig in das Ratschengehäuse 4 eingetaucht ist, ein verplombungsfähiges Sicherungselement 10 durch eine gemeinsame Öffnung zwischen Ratschengehäuse 4 und Ratschenhebel 8 eingeführt und über eine einfache Plombe gesichert werden kann.

Aufgrund der unterschiedlichen Längsabmessungen derartiger Adapter 6, die auch von unterschiedlichen Herstellern stammen können, besteht nun die Gefahr, dass mit relativ einfachen Mitteln der Adapter 6 aus dem Ratschenantrieb herausgehoben werden kann und auf diese Weise die LKW-Plane gegen unbefugten Zutritt geöffnet wird, z.B. bei geringer Planenspannung.

Hier setzt die Erfindung ein.

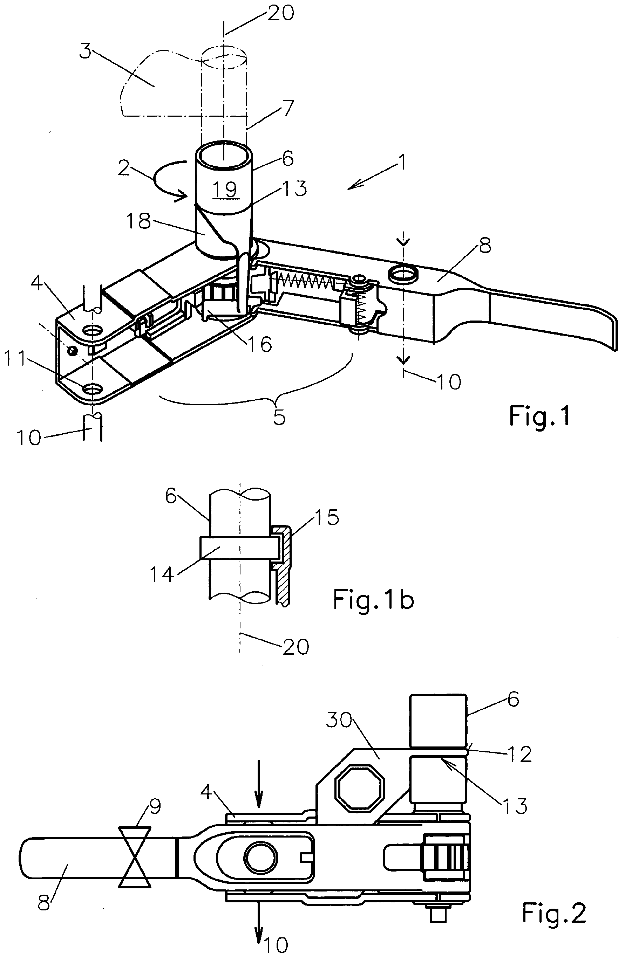

In dem gezeigten Ausführungsbeispiel gem. Fig.1 ist an dem Adapter 6 eine Umfangsrille 12 vorgesehen, die in den Außenumfang eingebracht ist.

In der Umfangsrille 12 sitzt ein die Drehachse 20 des Adapters 6 um mehr als die Hälfte des Umfangs umgreifendes Ringelement 13 frei drehbar. Mit dem Ringelement 13 ist ein Verschlussstück 30 verbunden, welches gegenüber dem Ratschengehäuse 4 ebenfalls durch ein verplombungsfähiges Sicherungselement 10 auf unbefugtes Öffnen kontrollierbar ist.

Dem gegenüber weist der Zollverschluss gem. Fig.1a abweichend von einem Adapter mit Umfangsrille einen Adapter mit einem umlaufenden Ringbund 14 auf, der ein die Drehachse 20 des Drehantriebs 2 um mehr als die Hälfte des Umfangs umfassendes Ringnutelement 15 frei drehbar aufnimmt, wobei mit dem Ringnutelement 15 entsprechend dem Ausführungsbeispiel gem. Fig.1 ein Verschlussstück 30 verbunden ist, welches ebenfalls gegenüber dem Ratschengehäuse 4 in gleicher Weise durch ein verplombungsfähiges Sicherungselement 10 auf unbefugtes Öffnen kontrollierbar ist.

Weiterhin zeigen die Figuren die Besonderheit, dass sowohl für den Ratschenhebel 3 auch als für das Verschlussstück 30 ein und dasselbe verplombungsfähige Sicherungselement 10 vorgesehen ist.

Das verplombungsfähige Sicherungselement ist in diesem Fall eine über Plomben in sich geschlossene Schnur, die durch entsprechende Bohrungen zwischen Ratschenhebel 8 und Ratschengehäuse 4 geführt wird und ein unzulässiges Öffnen des Ratschenhebels verbietet, weil das Schnurende verplombt ist.

Weiterhin zeigen die Figuren die Besonderheit, dass das Verschlussstück 30, welches praktisch als Fortsatz an dem Ringelement 13 bzw. dem Ringnutelement 15 sitzt, vom Sicherungselement 10 des Ratschenhebels 8 mit verschlossen wird.

Zu diesem Zweck ist das Verschlussstück 30 als Metallstück ausgebildet und sitzt fest mit dem Ringelement 13 bzw. dem Ringnutelement 15 verbunden mit einem Fortsatz zwischen Ratschengehäuse 4 und Ratschenhebel 8, wenn sich dieser in seiner Verschlussstellung befindet.

Wird nun der Ratschenhebel 8 durch den Zollverschluss gesichert, lässt sich auch das Verschlussstück 30 nicht mehr aus seiner Verschlussposition heraus bewegen, da es daran von dem Ratschenhebel 8 gehindert wird.

Zu diesem Zweck hintergreift das Metallstück, welches mit dem Ringelement bzw. Ringnutelement verbunden ist, den Ratschenhebel 8 parallel zu dessen Drehachse 20 und folgt der Innenkontur des Ratschengehäuses 4 so weit, dass der Ratschenhebel 8 bis in seine Verschlussstellung bewegt werden kann und sich das Metallstück dann mit einem entsprechenden Fortsatz zwischen Ratschengehäuse 4 und Ratschenhebel 8 befindet.

Zu diesem Zweck ist das Metallstück entsprechend winkelförmig, je nach den lokalen Gegebenheiten der Spannratsche 5 ausgebildet und kann entsprechend frei um die Drehachse 20 herumschwenken, wenn der Ratschenhebel 8 entsichert ist.

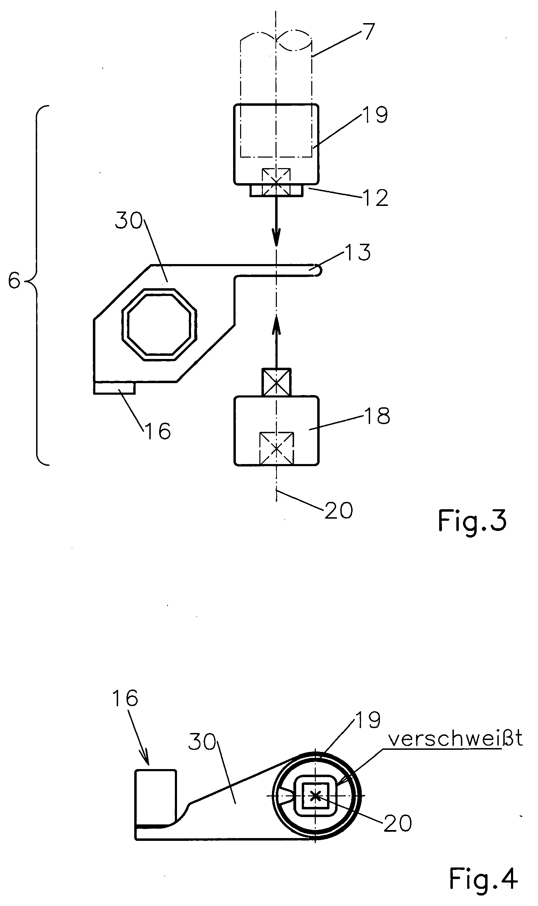

Die Herstellung des erfindungsgemäßen Adapters wird anhand der Figuren 3 und 4 näher erläutert.

Der Adapter nach der vorliegenden Erfindung weist ein Antriebsteil 18 auf und ein damit fest verbundenes Abtriebsteil 19. Antriebsteil 18 und Abtriebsteil 19 sind miteinander drehfest verbunden.

Zur Herstellung bestehen Antriebsteil 18 und Abtriebsteil 19 aus zwei unterschiedlichen Teilen, die über einen gemeinsamen unrunden Zapfen zusammengesteckt werden, wobei ein entsprechender Fortsatz an Antriebsteil 18 bzw. Abtriebsteil 19 zur Ausbildung der erfindungsgemäßen Umfangsrille vorgesehen ist.

In gleicher Weise gilt dies auch für die alternative Ausführungsform mit einem umlaufenden Ringbund 14 und dem entsprechenden Ringnutelement 15, wie in Figur 1b gezeigt.

Die beiden Adapterteile werden nun unter Zwischenlegen des Ringelements 13 zusammengesteckt und können beispielsweise entsprechend Fig.4 auf der Innenseite thermisch zusammengefügt sein.

Anschließend wird noch das Planenwickelrohr 7 in das entsprechende Adapterteil hineingepresst, so dass an der Kontaktstelle zwischen Planenwickelrohr 7 und entsprechender Adapteröffnung eine Drehfestverbindung entsteht, die auch nur noch spanabhebend gelöst werden kann.

Das Metallstück, welches sich an das Ringelement bzw. Ringnutelement anschließt, ist dann so geformt, dass es mit einer Sicherungsfahne 16 den Ratschenhebel 8 in jedem Falle hintergreift und auf diese Weise das Verschlussstück 30 in seiner Verschlussstellung hält, so dass auch ein gewaltsames Ausheben der Antriebsverbindung zwischen Spannratsche 5 und Planenwickelrohr 7 nur unter Hinterlassung von sichtbaren Spuren möglich ist.

Zweckmäßigerweise besteht das Metallstück aus einem Gussteil. Dies bietet den Vorteil, dass es relativ spröde ist und bei Gewaltanwendung bricht, so dass der Zollverschluss auf einfache Weise überprüft werden kann.

### Bezugszeichenliste

- 1: Zollverschluss
- 2: Drehantrieb
- 3: LKW-Plane
- 4: Ratschengehäuse
- 5: Spannratsche
- 6: Adapter
- 7: Planenwickelrohr
- 8: Ratschenhebel
- 9: Verschlussstellung
- 10: Sicherungselement
- 11: Bohrung in 4
- 12: Umfangsrille
- 13: Ringelement
- 14: Ringbund
- 15: Ringnutelement
- 16: Sicherungsfahne
- 17:
- 18: Antriebsteil
- 19: Abtriebsteil
- 20: Drehachse
- 30: Verschlussstück

## Patentansprüche

1. Zollverschluss (1) für den Drehantrieb (2) zum Spannen einer LKW-Plane (3), wobei der Drehantrieb (2) eine am Fahrzeug mit einem Ratschengehäuse (4) befestigte Spannratsche (5) und einen Adapter (6) aufweist, der mit einem Ende an der Spannratsche (5) sitzt und an seinem anderen Ende mit einem Planenwickelrohr (7) verbunden ist und wobei der Ratschenhebel (8) gegenüber dem Ratschengehäuse (4) in einer Verschlussstellung durch ein verplombungsfähiges Sicherungselement (10) auf unbefugtes Öffnen kontrollierbar ist, **dadurch gekennzeichnet, dass** an dem Adapter (6) eine Umfangsrille (12) vorgesehen ist, welche ein, die Drehachse (20) des Adapters (6) um mehr als die Hälfte des Umfangs umgreifendes Ringelement (13) drehbar aufnimmt und dass mit dem Ringelement (13) ein Verschlussstück (30) verbunden ist, welches gegenüber dem Ratschengehäuse (4) ebenfalls durch ein verplombungsfähiges Sicherungselement (10) auf unbefugtes Öffnen kontrollierbar ist.

2. Zollverschluss (1) für den Drehantrieb (2) zum Spannen einer LKW-Plane (3), wobei der Drehantrieb (2) eine am Fahrzeug mit einem Ratschengehäuse (4) befestigte Spannratsche (5) und einen Adapter (6) aufweist, der mit einem Ende an der Spannratsche (5) sitzt und an seinem anderen Ende mit einem Planenwickelrohr (7) verbunden ist und wobei der Ratschenhebel (8) gegenüber dem Ratschengehäuse (4) in einer Verschlussstellung durch ein verplombungsfähiges Sicherungselement (10) auf unbefugtes Öffnen kontrollierbar ist, **dadurch gekennzeichnet, dass** an dem Adapter (6) ein Ringbund (14) vorgesehen ist, der ein, die Drehachse (20) um mehr als die Hälfte des Umfangs umfassendes Ringnutelement (15) drehbar aufnimmt und dass mit dem Ringnutelement (15) ein Verschlussstück (30) verbunden ist, welches gegenüber dem Ratschengehäuse (4) ebenfalls durch ein verplombungsfähiges Sicherungselement (10) auf unbefugtes Öffnen kontrollierbar ist.

3. Zollverschluss (1) nach Anspruch 1 oder 2, **dadurch gekennzeichnet, dass** sowohl für den Ratschenhebel (8) als auch für das Verschlussstück (30) ein und dasselbe verplombungsfähige Sicherungselement (10) vorgesehen ist.

4. Zollverschluss (1) nach Anspruch 3, **dadurch gekennzeichnet, dass** das Verschlussstück (30) vom Sicherungselement (10) des Ratschenhebels (8) mit verschlossen wird.

5. Zollverschluss (1) nach einem der Ansprüche 1 bis 4, **dadurch gekennzeichnet, dass** das Verschlussstück (30) ein Metallstück ist, welches frei drehbar in der Umfangsrille (12) bzw. um den Ringbund (14) herum sitzt und mit einer Sicherungsfahne (16) zwischen dem Ratschengehäuse (4) und dem Ratschenhebel (8) angeordnet ist.

6. Zollverschluss (1) nach Anspruch 5, **dadurch gekennzeichnet, dass** das Metallstück den Ratschenhebel (8) parallel zu dessen Drehachse (20) hintergreift und der Innenkontur des Ratschengehäuses (4) folgt.

7. Zollverschluss (1) nach Anspruch 6, **dadurch gekennzeichnet, dass** das Metallstück den Ratschenhebel (8) winkelförmig zum Ratschengehäuse (4) gerichtet hintergreift.

8. Zollverschluss (1) nach Anspruch 5 bis 7, **dadurch gekennzeichnet, dass** das Metallstück ein Gussteil ist.

9. Adapter für den Zollverschluss (1) nach einem der Ansprüche 1 bis 8, **gekennzeichnet durch** ein Antriebsteil (18) und ein damit drehfest verbundenes Abtriebsteil (19), beide eine dazwischen liegende Umfangsrille (12) aufweisend und in der Umfangsrille (12) liegend ein drehbares Ringelement (13), welches den Innenumfang der Umfangsrille (12) um mehr als die Hälfte umgreift und welches ein gegenüber dem Ratschengehäuse (4) oder damit fest verbundener Bestandteile des Fahrzeugs verplombungsfähiges Sicherungselement (10) besitzt.

10. Adapter für den Zollverschluss (1) nach einem der Ansprüche 1 bis 8, **gekennzeichnet durch** ein Antriebsteil (18) und ein damit drehfest verbundenes Abtriebsteil (19), beide einen dazwischen liegenden Ringbund (14) aufweisend und ein den Ringbund (14) von außen umschließendes drehbares Ringnutelement (15), welches den Außenumfang des Ringsbunds (14) um mehr als die Hälfte umgreift und ein gegenüber dem Ratschengehäuse (4) oder damit fest verbundener Bestandteile des Fahrzeugs verplombungsfähiges Sicherungselement (10) besitzt.
